# EUROPÄISCHE PATENTANMELDUNG

(11) **EP 0 980 066 A1**
(43) Veröffentlichungstag der Anmeldung: **16.02.2000**
(21) Anmeldenummer: 98115006.3
(22) Anmeldetag: 10.08.1998
(51) Int. Cl.: G11B 7/24, G11B 7/26

(54) **Optisch lesbarer Datenträger sowie Verfahren und Anlage zu seiner Herstellung**

(71) Anmelder: SONOPRESS PRODUKTIONSGESELLSCHAFT FÜR TON- UND INFORMATIONSTRÄGER mbH, 33332 Gütersloh (DE)
(72) Erfinder: Wuttke, Andreas, 33604 Bielefeld (DE)
(74) Vertreter: Schaumburg, Thoenes & Thurn

(57) **Zusammenfassung**

Die Erfindung betrifft einen optisch lesbaren Datenträger, mit einer Substratplatte (12), auf deren einer Flachseite (18) eine Pitstruktur (20) ausgebildet ist, die aus einer Daten in digitaler Form definierenden Abfolge von Vertiefungen (22) und ebenen Abschnitten (24) gebildet ist. Zumindest im Bereich der Pitstruktur (20) ist auf der Flachseite (18) eine Reflexionsschicht (26) aufgebracht, mit der die Oberflächen der Vertiefungen (22) und der ebenen Abschnitte (24) der Pitstruktur (20) vollständig beschichtet sind. Die Reflexionsschicht (26) ist aus einer die Pitstruktur (20) zumindest teilweise bedeckenden ersten Materiallage (28) und mindestens einer weiteren Materiallage (30) gebildet.

## Beschreibung

Die Erfindung betrifft einen optisch lesbaren Datenträger mit einer Substratplatte, auf deren einer Flachseite eine Pitstruktur ausgebildet ist, die aus einer Daten in digitaler Form definierenden Abfolge von Vertiefungen und ebenen Abschnitten gebildet ist, und mit einer auf der Flachseite zumindest im Bereich der Pitstruktur aufgebrachten Reflexionsschicht, mit der die Oberflächen der Vertiefungen und der ebenen Abschnitte der Pitstruktur vollständig beschichtet sind. Ferner betrifft die Erfindung ein Verfahren nach dem Oberbegriff des Anspruchs 10 sowie eine Anlage nach dem Oberbegriff des Anspruchs 17 zum Herstellen eines optisch lesbaren Datenträgers.

Ein optisch lesbarer Datenträger der eingangs genannten Art ist beispielsweise als Compact Disc und als Digital Versatile Disc bekannt und wird beispielsweise als Tonträger in der Audiotechnik oder als Informationsträger in der Computertechnik eingesetzt. Der Datenträger hat eine aus einem transparenten Kunststoffmaterial wie Polycarbonat gefertigte Substratplatte, deren als Ausleseseite dienende Vorderseite üblicherweise plan ausgebildet ist. In die der Ausleseseite abgewandten Rückseite der Substratplatte ist eine Pitstruktur eingeprägt, die aus einer Abfolge von Vertiefungen und ebenen Abschnitten gebildet ist und die die auf dem Datenträger gespeicherten Informationen in digitaler Form definiert. Die auf der Substratplatte abgespeicherten Informationen werden mit Hilfe eines Lichtstrahles wie beispielsweise eines Laserstrahles gelesen, der auf die Ausleseseite der Substratplatte gerichtet und von den Vertiefungen und ebenen Abschnitten der Pitstruktur in Reflexionsrichtung moduliert wird. Der reflektierte Lichtstrahl wird von einer lichtempfindlichen Abtasteinrichtung erfaßt, die den modulierten Lichtstrahl in digitale Signale umwandelt. Damit der Lichtstrahl möglichst vollständig reflektiert wird, ist auf der der Rückseite der Substratplatte eine Reflexionsschicht aufgebracht, die die Oberflächen der Vertiefungen und ebenen Abschnitte vollständig bedeckt. Als Material für die Reflexionsschicht wird üblicherweise ein Metallmaterial wie Aluminium, Kupfer, Silizium oder Gold verwendet. Die Reflexionsschicht wird üblicherweise durch einen auf die Rückseite der Reflexionsschicht aufgetragenen Schutzlack vor Beschädigungen und Oxidation bewahrt.

Im allgemeinen sind die auf dem Datenträger geschriebenen Informationen urheberrechtlich oder patentrechtlich geschützt. Für Dritte ist es jedoch mit relativ geringem Aufwand möglich, Kopien des Datenträgers anzufertigen und solche Raubkopien widerrechtlich zu verbreiten. Zur Anfertigung von Kopien des Datenträgers wird zum Beispiel von einem Originaldatenträger mit Hilfe chemischer Verfahren zunächst der Schutzlack und anschließend die Reflexionsschicht entfernt. Anschließend kann eine exakte Kopie der Pitstruktur des Originaldatenträgers erstellt werden, mit der ein Preßwerkzeug für die Herstellung der Falsifikate gefertigt wird.

Um das Erkennen widerrechtlich kopierter Datenträger zu erleichtern und das widerrechtliche Kopieren von Datenträgern zu erschweren, sind verschiedenste Methoden aus dem Stand der Technik bekannt. So kann jeder Hersteller von Audio-Compact Discs von der IFPI (IFPI = International Federation of the Phonographic Industrie) eine Lizenz erwerben, die ihn berechtigt, auf die Compact Disc einen sogenannten SID-Code (SID = Source Identification Code) einzuprägen, der jedem Hersteller und jedem Preßwerkzeug individuell zugeordnet ist. Durch den SID-Code kann jederzeit ermittelt werden, durch welchen Hersteller und mit welchem Preßwerkzeug die Compact Disc gepreßt wurde. Eine unerlaubte Vervielfältigung der Datenträger läßt sich mit dem SID-Code jedoch nicht verhindern.

Um widerrechtlich kopierte Datenträger besser von Originaldatenträgern unterscheiden zu können, ist aus der US-4,967,286 bekannt, im Randbereich des Datenträgers außerhalb der Pitstruktur eine Hologrammstruktur vorzusehen, mit der der Originaldatenträger von einer widerrechtlich erstellten Kopie, die kein derartiges Hologramm trägt, problemlos unterschieden werden kann. Nachteilig bei diesem Verfahren ist jedoch, daß durch die Hologrammstruktur für die digitalen Daten weniger Platz auf dem Datenträger vorhanden ist und damit seine Speicherkapazität verringert wird.

Zur Vermeidung dieses Nachteils schlägt die EP-B-0 608 358 ein Verfahren zum Herstellen eines optisch lesbaren Datenträgers vor, bei dem auf die der Ausleseseite abgewandten Rückseite der Reflexionsschicht eine zusätzliche transparente Beschichtung aufgebracht ist, die mit einer Hologrammstruktur versehen ist. Bei diesem bekannten Verfahren besteht jedoch der Nachteil, daß der Herstellungsprozeß zeitlich und damit finanziell aufwendiger ist als herkömmliche Herstellungsverfahren.

Einen anderen Weg, Datenträger mit einem Kopierschutz zu versehen, geht die DE-C-43 11 683, die einen optisch lesbaren Datenträger beschreibt, bei dem als Kopierschutz in die ebenen Abschnitte der Pitstruktur zusätzliche Ausnehmungen eingebracht werden, die den Datenträger kennzeichnen. Die Tiefe der Ausnehmungen ist verglichen mit der Tiefe der die Daten definierenden Vertiefungen allerdings so gering, daß die Ausnehmungen zwar für den Betrachter erkennbar sind, beim Lesen der Pitstruktur von der Abtasteinrichtung nur geringfügig erfaßt werden und das Auslesesignal nicht verändern. Auch bei diesem Verfahren besteht der Nachteil, daß die Herstellungskosten verglichen mit den Herstellungskosten herkömmlicher Datenträger sehr hoch sind. Ein Zusatzgerät am Laserbeamrecorder ist notwendig, um eine entsprechende Codierung einzubringen.

In eine ähnliche Richtung, Originaldatenträger von Falsifikaten unterscheidbar zu machen, geht die DE-C-196 38 747, die vorschlägt, bei der Herstellung des Prägewerkzeuges für den Datenträger die Masterplatte zusätzlich mit einer Abbildung zu belichten, nachdem sie mit einem Fotoresist beschichtet und die die digitalen Daten definierende Pitstruktur auf sie übertragen wurde. Die zusätzlich auf die Pitstruktur belichtete Abbildung ist auf dem Prägewerkzeug mit ausgebildet und wird durch das Prägewerkzeug beim Pressen des Datenträgers mit auf die Substratplatte übertragen, so daß die Abbildung beim fertigen Datenträger von der Ausleseseite her auf der Pitstruktur erkennbar ist.

Eine weitere Möglichkeit, Originaldatenträger von Kopien unterscheidbar zu machen, besteht in der Verwendung von jedem Datenträgerhersteller individuell zugeordneten, kodierten Farbpartikeln, die dem auf den Schutzlack des Datenträgers aufgedruckten Label zugesetzt sind. Hierbei besteht jedoch das Problem, daß der Unterschied zwischen Original und Fälschung nur durch ein Mikroskop, ein UV-Lampe oder aufwendige Analyseverfahren, nicht jedoch durch eine einfache Sichtkontrolle erkennbar ist.

Bei Datenträgern, die insbesondere im Bereich der Computertechnik verwendet werden und auf die beispielsweise Software aufgespielt ist, wird vorgeschlagen, verschlüsselte Daten auf dem Datenträger abzuspeichern, die durch zusätzliche Programme oder die Eingabe von Zahlencodes während der Benutzung der Software entschlüsselt werden müssen.

So wird in der WO 97/15051 vorgeschlagen, auf dem Datenträger während dessen Herstellung Prüfkoordinaten anzugeben, die einen vorgegebenen, für jeden Datenträger individuellen Prüfabschnitt definieren. Beim Einsatz des Datenträgers in einer Datenverarbeitungsanlage wird durch ein auf dem Datenträger abgespeichertes Programm überprüft, ob die Prüfkoordinaten mit den Polarkoordinaten des vorgegebenen Abschnittes übereinstimmen. Erst wenn die Überprüfung der Prüfkoordinaten ergibt, daß die Polarkoordinaten des vorgegebenen Abschnittes mit den angegebenen Prüfkoordinaten übereinstimmen, können die weiteren Informationen auf dem Datenträger entschlüsselt werden. Da der vorgegebene Abschnitt bei der Herstellung für jeden Datenträger verändert wird, ist die Verwendung eines widerrechtlich kopierter Datenträgers durch Dritte nicht möglich. Nachteilig an diesem Verfahren jedoch ist, daß bei der Herstellung des Datenträgers Zusatzgeräte erforderlich sind, mit denen die Datenträger verschlüsselt werden. Ferner kann dieses Verfahren nur durch zusätzliche technische Modifizierungen am Abspielgerät für Audio- oder Video-Datenträger verwendbar gemacht werden.

Den zuvor beschriebenen Maßnahmen, Falsifikate von Originaldatenträgern unterscheidbar zu machen bzw. das Kopieren von Datenträgern zu erschweren, ist gemeinsam, daß sie nur durch einen entsprechend hohen Aufwand realisiert werden können.

Es ist Aufgabe der Erfindung, einen optisch lesbaren Datenträger bzw. ein Verfahren sowie eine Anlage zum Herstellen eines optisch lesbaren Datenträgers bereitzustellen, der eindeutig von Falsifikaten unterschieden und nur mit sehr großem Aufwand kopiert werden kann.

Diese Aufgabe wird bei einem optisch lesbaren Datenträger der eingangs genannten Art dadurch gelöst, daß die Reflexionsschicht aus einer die Pitstruktur zumindest teilweise bedeckenden ersten Materiallage und mindestens einer weiteren Materiallage gebildet ist. Ferner wird die Aufgabe durch ein Verfahren mit den Merkmalen nach Anspruch 10 bzw. durch eine Anlage mit den Merkmalen nach Anspruch 17 gelöst. Vorteilhafte Weiterbildungen ergeben sich aus den von den jeweiligen Hauptansprüchen abhängigen Unteransprüchen.

Bei der Erfindung ist die Reflexionsschicht aus mindestens zwei Materiallagen gebildet, die sich gegebenenfalls überdecken können. Durch das Auftragen mehrerer Materiallagen ist es möglich, die Schichtdicke der Reflexionsschicht zu variieren, so daß durch die Anordnung der Materiallagen zueinander und den sich daraus ergebenden, sich verändernden Schichtdicken der Reflexionsschicht die Reflexionsschicht mit einer Kennzeichnung beispielsweise in Form eines Firmenlogos des Herstellers versehen werden kann. Die erfindungsgemäße Ausbildung der Reflexionsschicht aus mehreren Materiallagen ermöglicht eine so eindeutige Kennzeichnung des Datenträgers, daß eine Unterscheidung des Originales von einem Falsifikat, dessen Reflexionsschicht nicht aus mehreren Materiallagen gefertigt ist, problemlos möglich ist. Bei einer widerrechtlichen Kopie des Datenträgers, muß der Fälscher also nicht nur die Pitstruktur des Datenträgers kopieren, sondern auch versuchen, das Erscheinungsbild der Reflexionsschicht nachzuahmen. Da die Kennzeichnung in die Reflexionsschicht eingearbeitet ist, kann sie bei ausreichend geringen Schichtdicken für die Materiallagen sowohl von der Ausleseseite als auch von der mit der Pitstruktur versehenen Rückseite erkannt werden, so daß es zum Fälschen des Datenträgers nicht ausreicht, die Kennzeichnung beispielsweise durch Aufdrucken auf der Rückseite der Reflexionsschicht zu imitieren. Der Fälscher müßte folglich nicht nur mehrere Materiallagen für die Reflexionsschicht verwenden, er müßte die Materiallagen auch in ähnlicher oder gleicher Weise auf den Datenträger auftragen, um die durch die beiden Materiallagen in der Reflexionsschicht definierte Kennzeichnung realisieren zu können. Dies wäre jedoch nur mit einem entsprechend hohen technischen Aufwand realisierbar, der die Fälschung von Datenträgern für den Fälscher wirtschaftlich uninteressant werden läßt.

Bei einer bevorzugten Ausführungsform des optisch lesbaren Datenträgers bedeckt die erste Materiallage die Pitstruktur vollständig, während die weitere Materiallage die der Flachseite abgewandte Oberfläche der ersten Materiallage zumindest teilweise bedeckt. Dadurch können unterschiedliche optische Wirkungen wie beispielsweise Farbänderungen in der Reflexionsschicht, die sich durch die variierende Schichtdicke ergeben, bei der Kennzeichnung des Datenträgers erzielt werden. Ferner ist der Einsatz chemischer Verfahren erschwert, mit denen die Reflexionsschicht beim Erstellen einer Masterplatte für die Raubkopie abgelöst wird, da zunächst nur in einem bestimmten Abschnitt des Datenträgers die weitere Materiallage abgelöst werden muß, bevor die erste Materiallage entfernt werden kann.

Bei einer alternativen Ausführungsform des optischen Datenträgers bedeckt die erste Materiallage die Pitstruktur nur teilweise, während die weitere Materiallage sowohl die erste Materiallage als auch die verbleibenden, unbeschichteten weiteren Bereiche der Pitstruktur bedeckt. Auch hier werden unterschiedliche, für den Betrachter erkennbare Effekte bei der Kennzeichnung erreicht, die die Unterscheidung der Originale von Falsifikaten erleichtern.

Als dritte Möglichkeit die Materiallagen zueinander anzuordnen, wird vorgeschlagen, erste Bereiche der Pitstruktur mit der ersten Materiallage und die verbleibenden, unbeschichteten weiteren Bereiche der Pitstruktur mit der weiteren Materiallage zu bedecken, so daß eine geschlossene Reflexionsschicht gebildet ist. Auf diese Weise wird ermöglicht, daß weniger präzise gefertigte Nachahmungen, bei denen sich die beiden Materiallagen überschneiden, besser von Originaldatenträgern zu unterscheiden sind.

Die Schichtdicke jeder Materiallage liegt vorzugsweise in einem Bereich von etwa 30 bis 100 nm, um die Materialkosten bei der Massenproduktion von Datenträgern beispielsweise bei der Verwendung besonders hochwertiger Materialien wie Gold gering zu halten. Ferner wird durch die geringen Schichtdicken erreicht, daß die Materiallagen jeweils so ausreichend transparent sind, daß ein Durchschimmern der Materialien bei sich überdeckenden Materiallagen für den Betrachter erkennbar ist.

Besonders von Vorteil ist es, wenn für die Materiallagen unterschiedliche Materialien verwendet werden. Dadurch können optische Effekte, die sich beispielsweise durch die unterschiedlichen Reflexionskoeffizienten der verschiedenen Materialien ergeben, in der Reflexionsschicht realisiert werden, die eine noch weitreichendere und noch eindeutigere Kennzeichnung des Datenträgers ermöglichen.

Für die Erzeugung der einzelnen Materiallagen der Reflexionsschicht eignen sich insbesondere Metallmaterialien wie Aluminium, Gold, Kupfer, Silizium oder ähnliches, da diese Materialien einerseits über einen ausreichend hohen Reflexionskoeffizienten verfügen, andererseits sehr widerstandsfähig gegenüber chemischen Verfahren sind, die beim Erstellen von Raubkopien zum Ablösen der Reflexionsschicht angewandt werden. Alternativ ist die Verwendung von Metallverbindungen wie Oxiden oder Boriden möglich, sofern diese den erforderlichen Reflexionskoeffizienten besitzen.

Um eine eindeutige Kennzeichnung des Datenträgers und damit Unterscheidbarkeit gegenüber Falsifikaten zu ermöglichen, ist es bei dem Einsatz unterschiedlicher Materialien für die Materiallagen besonders vorteilhaft, wenn sich die Materialien der beiden Materiallagen farblich unterscheiden. Dabei ist es besonders von Vorteil, wenn die Materialien der beiden Materiallagen in den Bereichen, in denen sich die Materiallagen überdecken, eine dritte Mischfarbe bilden, wodurch eine zusätzliche farbliche Kennzeichnung des Datenträgers möglich wird.

Zur Herstellung des erfindungsgemäßen Datenträgers wird vorgeschlagen, nach dem Pressen der Substratplatte die Reflexionsschicht aufzutragen, indem die Flachseite der Substratplatte zumindest teilweise mit der ersten Materiallage und anschließend mit der weiteren Materiallage beschichtet wird. Auf diese Weise muß der Herstellungsprozeß nicht unterbrochen werden, sondern kann kontinuierlich fortgeführt werden.

Um den Wünschen des Herstellers entsprechende Kennzeichnungen auf dem Datenträger aufzubringen, kann beim Erzeugen der Reflexionsschicht die Flachseite der Substratplatte zumindest im Bereich der Pitstruktur zunächst vollständig mit der ersten Materiallage beschichtet werden. Nach dem Beschichten der Flachseite mit der ersten Materiallage wird dann die Flachseite und die erste Materiallage teilweise mit einer Maske abgedeckt und die nicht durch die Maske abgedeckten Bereiche der Flachseite mit der weiteren Materiallage beschichtet. Zum Erzeugen der Kennzeichnung werden Masken verwendet, die mit entsprechenden Aussparungen für die Kennzeichnung versehen sind.

Alternativ kann, um sich überschneidende Bereiche zwischen der ersten und der weiteren Materiallage zu erzeugen, beim Aufbringen der Reflexionsschicht die Flachseite der Substratplatte teilweise mit einer ersten Maske abgedeckt und die nicht von der ersten Maske abgedeckten Bereiche der Flachseite mit der ersten Materiallage beschichtet werden. Nach dem Beschichten der Flachseite mit der ersten Materiallage wird die Maske entfernt und die Flachseite mit der weiteren Materiallage beschichtet.

Ferner ist es denkbar, vor dem Beschichten der Flachseite mit der weiteren Materiallage die Flachseite mit einer sich von der ersten Maske unterscheidenden zweiten Maske derart abzudecken, daß nur die nicht von der zweiten Maske abgedeckten Bereiche mit der weiteren Materiallage beschichtet werden. Dadurch können sich teilweise überschneidende Bereiche erzeugt werden, die eine weitergehende Kennzeichnung beispielsweise in Form von fein strukturierten Firmenlogos ermöglichen.

Das Beschichten der Substratplatte erfolgt vorzugsweise durch Kathodenzerstäubung, auch Sputtern genannt. Bei diesem Verfahren wird an einer in einer Vakuumkammer angeordneten Kathode ein aus dem Beschichtungsmaterial bestehendes Target befestigt, das anschließend mit Plasmaionen eines in der Vakuumkammer befindlichen ionisationsfähigen Gases beschossen wird. Die auf das Target treffenden Plasmaionen schießen aus dem Atomverband des Targets einzelne Atome heraus, die sich mit hoher Geschwindigkeit durch die Vakuumkammer bewegen und auf der zum Beschichten in die Vakuumkammer positionierten Substratplatte niederschlagen und auf dieser eine dünne Materialschicht ausbilden. Durch Verwendung eines Edelgases wie Argon als Plasmagas wird eine Reaktion der losgelösten Atome mit anderen Ionen vermieden, so daß sich auf der Substratplatte eine aus reinem Targetmaterial bestehende Materiallage ausbildet. Anstelle von Edelgasen können auch reaktive Gase wie Sauerstoff, Stickstoff oder Kohlendioxid eingesetzt werden, die mit den losgeschossenen Atomen zumindest teilweise reagieren, so daß sich auf der Substratplatte eine aus den Reaktionsmaterialien bestehende Materiallage ausbildet.

Zum Herstellen des erfindungsgemäßen Datenträgers wird eine Anlage vorgeschlagen, bei der zunächst mit einer Spritzgußvorrichtung die Substratplatte gepreßt wird. Danach wird auf die Substratplatte mit Hilfe einer Beschichtungseinrichtung zunächst die erste Materiallage und anschließend die zweite Materiallage aufgetragen.

Abhängig von der Anzahl der die Reflexionsschicht bildenden Materiallagen hat die Beschichtungsanlage vorzugsweise eine erste Beschichtungseinrichtung zum Beschichten der Substratplatte mit der ersten Materiallage und mindestens eine sich an die erste Beschichtungseinrichtung in der Bearbeitungsreihenfolge anschließende weitere Beschichtungseinrichtung zum Beschichten der Substratplatte mit der weiteren Materiallage. Andererseits ist es denkbar, die Beschichtung der Substratplatte in einer einzigen Beschichtungseinrichtung vorzunehmen, in der die Targets entsprechend der zu erzeugenden Materiallagen ausgetauscht werden.

Nachfolgend wird die Erfindung anhand zweier Ausführungsbeispiele unter Bezugnahme auf die Zeichnung näher erläutert Darin zeigen:
- Figur 1: eine Draufsicht auf ein erstes Ausführungsbeispiel einer Compact Disc,
- Figur 2: eine geschnittene Seitenansicht der Compact Disc nach Figur 1 entlang der Schnittlinie A-A, und
- Figur 3: eine geschnittene Seitenansicht eines zweiten Ausführungsbeispieles einer Compact Disc.

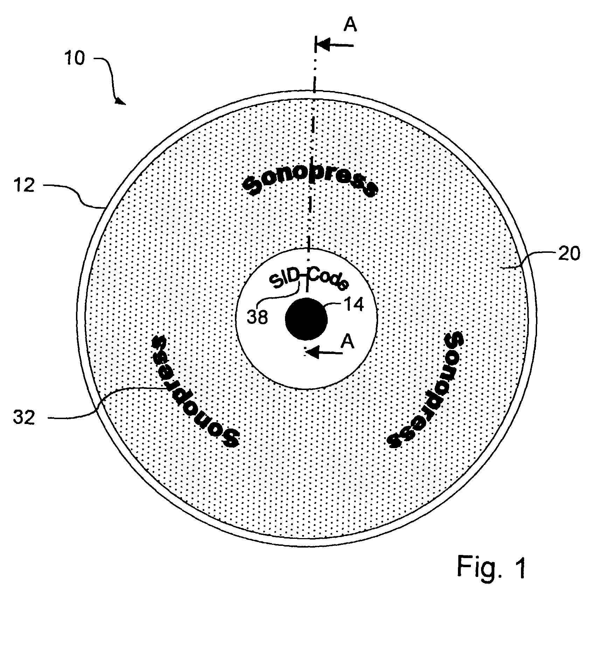

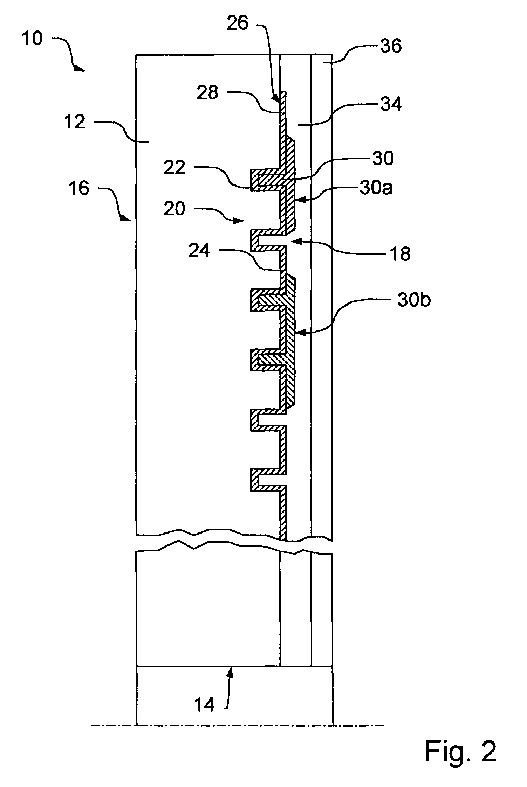

In den Figuren 1 und 2 ist ein erstes Ausführungsbeispiel einer Compact Disc 10 gezeigt. Die Compact Disc 10 hat eine aus transparentem Polycarbonat gefertigte, kreisrunde Substratplatte 12, die eine konzentrisch zum Mittelpunkt der Substratplatte 12 angeordnete Zentrieröffnung 14 hat, mit der die Compact Disc 10 in einer Abtasteinrichtung (nicht dargestellt) zentriert gehalten werden kann.

Die in Figur 2 links dargestellte Vorderseite der Substratplatte 12 dient als Ausleseseite 16, auf die die Abtasteinrichtung den zum Lesen der Informationen erzeugten Lichtstrahl projiziert. Auf der der Ausleseseite 16 abgewandten Flachseite 18 der Substratplatte 12 sind die auf der Compact Disc 10 enthaltenen Informationen in Form einer Pitstruktur 20 eingeprägt. Die Pitstruktur 20 besteht aus einer spiralförmig auf der Substratplatte 12 verlaufenden Abfolge von Vertiefungen 22 und ebenen Abschnitten 24, die Informationen als digitale Daten definiert. Die Flachseite 18 der Substratplatte 12 ist ferner mit einer Reflexionsschicht 26 beschichtet, die die Oberflächen der Vertiefungen 22 und der ebenen Abschnitte 24 im Bereich der Pitstruktur 20 vollständig bedeckt.

Die Reflexionsschicht 26 hat eine erste Materiallage 28 aus Aluminium, mit der die gesamte auf der Flachseite 18 ausgebildete Pitstruktur 20 beschichtet ist und die die Oberflächen der Vertiefungen 22 und der ebenen Abschnitte 24 vollständig bedeckt. Die der Substratplatte 12 abgewandte Rückseite der ersten Materiallage 28 ist zusätzlich in mehreren Bereichen 30a und 30b mit einer zweiten Materiallage 30 aus Gold beschichtet. Die beiden Materiallagen 28 und 30 haben jeweils etwa eine Schichtdicke von 75 nm, so daß je nach Blickrichtung des Betrachters in Figur 2 von rechts betracht die erste Materiallage 28 durch die zweite Materiallage 30 oder in Figur 2 von links betrachtet die zweite Materiallage 30 durch die erste Materiallage 28 noch hindurchschimmert und für den Betrachter erkennbar ist. Dadurch ist es möglich, in der Reflexionsschicht 26 der Compact Disc 10 im Bereich der Pitstruktur 20 eine Kennzeichnung 32 (vgl. Figur 1) beispielsweise in Form eines Firmenlogos der Herstellerfirma zu erzeugen, die das Fälschen bzw. das Erstellen einer Kopie der Compact Disc 10 erschwert.

Um die aus den beiden Materiallagen 28 und 30 gebildete Reflexionsschicht 26 zu schützen, ist auf deren der Substratplatte 12 abgewandten Rückseite ferner ein Schutzlack 34 aufgetragen, auf dessen Rückseite wiederum ein Label 36 aufgedruckt ist. Als weitere Schutzmaßnahme gegen eine unerlaubte Vervielfältigung der Compact Disc 10 ist nahe der Zentrieröffnung 14 ein für den Hersteller individuallisierter SID-Code 38 eingepreßt, wie Figur 1 zeigt.

Bei der Herstellung der Compact Disc 10 wird zunächst in einer Spritzgußvorrichtung unter Verwendung eines Preßwerkzeuges die Substratplatte 12 gepreßt, wobei auf deren Flachseite 18 die Pitstruktur 20 ausgeformt wird. Anschließend wird die Substratplatte 12 in die Vakuumkammer einer Kathodenzerstäubungsanlage eingelegt, in der die Flachseite 18 mit der ersten Materiallage 28 aus Aluminium beschichtet wird. Dabei verhindert ein erster Satz Masken in der Kathodenzerstäubungsanlage, daß die Substratplatte 12 in ihrem Zentrum und in einem äußeren Randbereich von etwa 2 mm beschichtet wird.

Nach dem Beschichten der Substratplatte 12 mit der ersten Materiallage 28 aus Aluminium wird in die Kathodenzerstäubungsanlage zusätzlich zu dem ersten Satz Masken ein zweiter Satz Masken eingelegt, mit dem die erste Materiallage 28 nur teilweise abgedeckt wird. Die unbedeckt gebliebenen Abschnitte der ersten Materiallage 28 bilden bei der fertigen Compact Disc 10 die Bereiche 30a und 30b, die mit der zweiten Materiallage 30 aus Gold beschichtet sind. Des weiteren wird das Aluminiumtarget in der Kathodenzerstäubungsanlage durch ein Goldtarget ersetzt. Anschließend wird die Substratplatte 12 mit der zweiten Materiallage 30 aus Gold beschichtet, wobei die endgültige Reflexionsschicht 26 mit der Kennzeichnung 32 auf der Substratplatte 12 ausgebildet wird. Nach dem Beschichten der Substratplatte 12 mit der aus den beiden Materiallagen 28 und 30 bestehenden Reflexionsschicht 26 wird die Rückseite der Reflexionsschicht 26 schließlich mit dem Schutzlack 34 beschichtet und das Label 36 aufgedruckt.

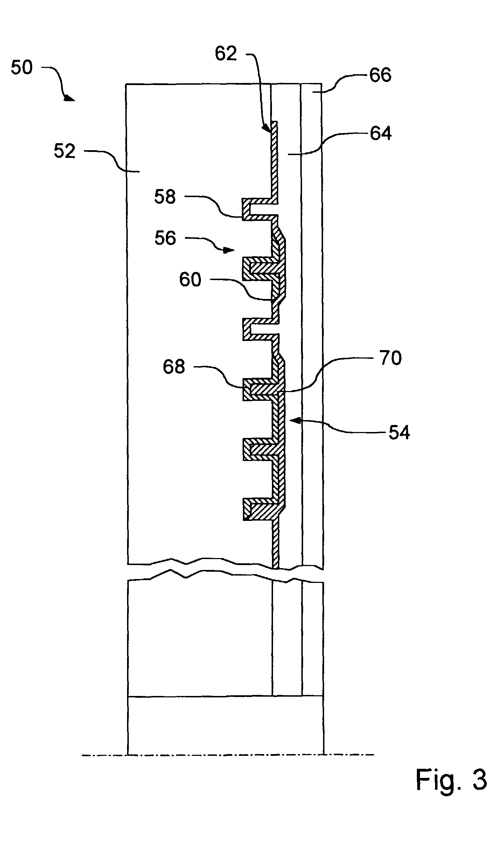

Figur 3 zeigt ein zweites Ausführungsbeispiel einer Compact Disc 50, deren Aufbau im wesentlichen dem Aufbau des ersten Ausführungsbeispiels gleicht. So ist die Compact Disc 50 gleichfalls aus einer Substratplatte 52 gebildet, auf deren einer Flachseite 54 eine Pitstruktur 56 ausgeformt ist, die aus einer Abfolge von Vertiefungen 58 und ebenen Abschnitten 60 gebildet ist. Die Flachseite 54 der Substratplatte 52 ist gleichfalls mit einer Reflexionsschicht 62 beschichtet, die die Oberflächen der Vertiefungen 58 und der ebenen Abschnitte 60 vollständig bedeckt, und auf deren Rückseite ein Schutzlack 64 und ein Label 66 aufgetragen ist.

Einziger Unterschied des zweiten Ausführungsbeispiels zum ersten Ausführungsbeispiel ist der Aufbau der Reflexionsschicht 62. Auch hier besteht die Reflexionsschicht 62 aus einer ersten Materiallage 68 aus Aluminium und einer zweiten Materiallage 70 aus Gold. Die erste Materiallage 68 bedeckt jedoch nur einen Teil der Pitstruktur 56, läßt andere Abschnitte der Pitstruktur 56 jedoch unbedeckt. Die unbedeckten Abschnitte der Pitstruktur 56 sind mit der zweiten Materiallage 70 aus Gold beschichtet, so daß sich im Bereich der Pitstruktur 56 eine vollständig geschlossene Reflexionsschicht 62 ergibt. Zusätzlich bedeckt die zweite Materiallage 70 aus Gold teilweise die Rückseite der ersten Materiallage 68, so daß aufgrund der geringen Schichtdicke der beiden Materiallagen 68 und 70 von etwa 75 nm bei Betrachtung der Compact Disc 50 eine von den beiden Metallmaterialien Aluminium und Gold bestimmte Mischfarbe erkennbar wird. Durch das teilweise Beschichten der Pitstruktur 56 mit den sich farblich unterscheidenden Metallmaterialien entsteht auf der Compact Disc 50 eine Kennzeichnung, wie sie beispielsweise für das erste Ausführungsbeispiel in Figur 1 gezeigt ist.

Bei der Herstellung der Compact Disc 50 wird in gleicher Weise verfahren wie bei der Herstellung des ersten Ausführungsbeispieles, allerdings wird die Substratplatte 52 vor dem Beschichten mit der ersten Materiallage 68 aus Aluminium in der Kathodenzerstäubungsanlage mit einem ersten Satz Masken geschützt, der nicht nur das Zentrum und den Randbereich der Substratplatte 52 sondern auch Teile der Pitstruktur 56 abdeckt. Anschließend wird die Substratplatte 52 mit Aluminium beschichtet, wobei sich die erste Materiallage 68 ausbildet, die an den von dem ersten Satz Masken abgedeckten Bereichen unterbrochen ist. Danach wird das Aluminiumtarget in der Kathodenzerstäubungsanlage durch ein Goldtarget ersetzt und die Substratplatte 52 mit einem zweiten Satz Masken abgedeckt, der einen Teil der ersten Materiallage 68 bedeckt, die unbeschichteten Bereiche jedoch frei läßt. Anschließend wird die Substratplatte 52 mit Gold beschichtet, wobei die auf der Flachseite 54 gebildete Reflexionsschicht 62 geschlossen wird und sich im Bereich der Pitstruktur 56 die Kennzeichnung ergibt.

## Patentansprüche

1. Optisch lesbarer Datenträger mit einer Substratplatte (12; 52), auf deren einer Flachseite (18; 54) eine Pitstruktur (20; 56) ausgebildet ist, die aus einer Daten in digitaler Form definierenden Abfolge von Vertiefungen (22; 58) und ebenen Abschnitten (24; 60) gebildet ist, und mit einer auf der Flachseite (18; 54) zumindest im Bereich der Pitstruktur (20, 56) aufgebrachten Reflexionsschicht (26; 62), mit der die Oberflächen der Vertiefungen (22; 58) und der ebenen Abschnitte (24; 60) der Pitstruktur (20; 56) vollständig beschichtet sind, dadurch **gekennzeichnet,** daß die Reflexionsschicht (26; 62) aus einer die Pitstruktur (20; 56) zumindest teilweise bedeckenden ersten Materiallage (28; 68) und mindestens einer weiteren Materiallage (30; 70) gebildet ist.

2. Optisch lesbarer Datenträger nach Anspruch 1, dadurch **gekennzeichnet,** daß die erste Materiallage (28) die Pitstruktur (20) vollständig bedeckt, und daß die weitere Materiallage (30) die der Flachseite (18) abgewandte Oberfläche der ersten Materiallage (28) zumindest teilweise bedeckt.

3. Optisch lesbarer Datenträger nach Anspruch 1, dadurch **gekennzeichnet,** daß die erste Materiallage (68) die Pitstruktur (56) nur teilweise bedeckt, und daß die weitere Materiallage (70) sowohl die erste Materiallage (68) als auch die verbleibenden, unbeschichteten weiteren Bereiche der Pitstruktur (56) bedeckt.

4. Optisch lesbarer Datenträger nach Anspruch 1, dadurch **gekennzeichnet,** daß erste Bereiche der Pitstruktur (56) mit der ersten Materiallage (68) und die verbleibenden, unbeschichteten weiteren Bereiche der Pitstruktur (56) mit der weiteren Materiallage (70) bedeckt sind, so daß eine geschlossene Reflexionsschicht (62) gebildet ist.

5. Optisch lesbarer Datenträger nach einem der Ansprüche 1 bis 4, dadurch **gekennzeichnet,** daß die Schichtdicke jeder Materiallage (28, 30; 68, 70) in einem Bereich von etwa 30 bis 100 nm liegt.

6. Optisch lesbarer Datenträger nach einem der Ansprüche 1 bis 5, dadurch **gekennzeichnet,** daß die erste Materiallage (28; 68) aus einem ersten Material und die weitere Materiallage (30; 70) aus einem sich vom ersten Material unterscheidenden weiteren Material gebildet ist.

7. Optisch lesbarer Datenträger nach Anspruch 6, dadurch **gekennzeichnet,** daß die erste Materiallage (28; 68) und die weitere Materiallage (30; 70) jeweils aus einem Metallmaterial gebildet sind.

8. Optisch lesbarer Datenträger nach Anspruch 6 oder 7, dadurch **gekennzeichnet,** daß sich die Materialien der beiden Materiallagen (28, 30; 68, 70) farblich unterscheiden.

9. Optisch lesbarer Datenträger nach Anspruch 8, dadurch **gekennzeichnet,** daß die Materialien der beiden Materiallagen (28, 30; 68, 70) in den Bereichen, in denen sich die Materiallagen (28, 30; 68, 70) überdecken, eine Mischfarbe bilden.

10. Verfahren zum Herstellen eines optisch lesbaren Datenträgers, bei dem auf die eine Flachseite (18; 54) einer den Datenträger (10; 50) bildenden Substratplatte (12; 52) eine Pitstruktur (20; 56) eingepreßt wird, die aus einer Daten in digitaler Form definierenden Abfolge von Vertiefungen (22; 58) und ebenen Abschnitten (24; 60) gebildet ist, und bei dem anschließend auf die Flachseite (18; 54) zumindest im Bereich der Pitstruktur (20; 56) eine Reflexionsschicht (26; 62) aufgebracht wird, mit der die Oberflächen der Vertiefungen (22; 58) und der ebenen Abschnitte (24; 60) der Pitstruktur (20, 56) vollständig beschichtet werden, dadurch **gekennzeichnet,** daß zum Aufbringen der Reflexionsschicht (26; 62) die Flachseite (18; 54) der Substratplatte (12; 52) zumindest teilweise mit einer ersten Materiallage (28; 68) und anschließend mit mindestens einer weiteren Materiallage (30; 70) beschichtet wird.

11. Verfahren nach Anspruch 10, dadurch **gekennzeichnet,** daß beim Aufbringen der Reflexionsschicht (26) die Flachseite (18) der Substratplatte (12) zumindest im Bereich der Pitstruktur (20) vollständig mit der ersten Materiallage (28) beschichtet wird, und daß nach dem Beschichten der Flachseite (18) mit der ersten Materiallage (28) die Flachseite (18) und die erste Materiallage (28) teilweise mit einer Maske abgedeckt und die nicht durch die Maske abgedeckten Bereiche der Flachseite (18) mit der weiteren Materiallage (30) beschichtet werden.

12. Verfahren nach Anspruch 10, dadurc**h gekennzeichnet,** daß zum Aufbringen der Reflexionsschicht (62) die Flachseite (54) der Substratplatte (52) teilweise mit einer ersten Maske abgedeckt wird und die nicht von der ersten Maske abgedeckten Bereiche der Flachseite (54) mit der ersten Materiallage (68) beschichtet werden, und daß nach dem Beschichten der Flachseite (54) mit der ersten Materiallage (68) die Maske entfernt und die Flachseite (54) mit der weiteren Materiallage (70) beschichtet wird.

13. Verfahren nach Anspruch 12, dadurch **gekennzeichnet,** daß vor dem Beschichten der Flachseite (54) mit der weiteren Materiallage (70) die Flachseite (54) mit einer sich von der ersten Maske unterscheidenden zweiten Maske derart abgedeckt wird, daß nur die nicht von der zweiten Maske abgedeckten Bereiche mit der weiteren Materiallage (70) beschichtet werden.

14. Verfahren nach einem der Ansprüche 10 bis 13, dadurch **gekennzeichnet,** daß das Beschichten der Flachseite (18; 54) mit der ersten Materiallage (28; 68) und der weiteren Materiallage (30; 70) durch Kathodenzerstäubung erfolgt.

15. Verfahren nach einem der Ansprüche 10 bis 14, dadurch **gekennzeichnet,** daß die erste Materiallage (28; 68) aus einem ersten Material und die weitere Materiallage (30; 70) aus einem sich vom ersten Material unterscheidenden zweiten Material gebildet wird.

16. Verfahren nach Anspruch 15, dadurch **gekennzeichnet,** daß die erste Materiallage (28; 68) und die weitere Materiallage (30; 70) jeweils aus einem Metallmaterial gebildet sind.

17. Anlage zum Herstellen eines optisch lesbaren Datenträgers, mit einer Spritzgußvorrichtung die unter Verwendung eines Prägewerkzeuges eine den Datenträger (10; 50) bildenden Substratplatte (12; 52) preßt, auf deren einer Flachseite (18; 54) beim Pressen eine Pitstruktur (20; 56) ausgeformt wird, die aus einer Daten in digitaler Form definierenden Abfolge von Vertiefungen (22; 58) und ebenen Abschnitten (24; 60) gebildet ist, und mit einer Beschichtungsanlage, mit der auf die Flachseite (18; 54) der Substratplatte (12; 52) zumindest im Bereich der Pitstruktur (20; 56) eine Reflexionsschicht (26; 62) aufgebracht wird, mit der die Oberflächen der Vertiefungen (22; 58) und der ebenen Abschnitte (24; 60) der Pitstruktur (20; 56) vollständig beschichtet werden, dadurch **gekennzeichnet,** daß die Beschichtungsanlage beim Aufbringen der Reflexionsschicht (26; 62) die Flachseite (18; 54) der Substratplatte (12; 52) mit einer ersten Materiallage (28; 68) und anschließend mit mindestens einer weiteren Materiallage (30; 70) beschichtet.

18. Anlage nach Anspruch 17, dadurch **gekennzeichnet,** daß in die Beschichtungsanlage eine erste Maske einsetzbar ist, mit der die Flachseite (54) der Substratplatte (52) beim Beschichten mit der ersten Materiallage (68) teilweise abgedeckt ist.

19. Anlage nach Anspruch 17 oder 18, dadurch **gekennzeichnet,** daß in die Beschichtungsanlage eine weitere Maske einsetzbar ist, mit der die Flachseite (54) der Substratplatte (52) beim Beschichten mit der weiteren Materiallage (68) teilweise abgedeckt ist.

20. Anlage nach Anspruch 17, 18 oder 19, dadurch **gekennzeichnet,** daß die Beschichtungsanlage eine erste Beschichtungseinrichtung zum Beschichten der Substratplatte (12; 52) mit der ersten Materiallage (28; 68) und mindestens eine sich an die erste Beschichtungseinrichtung in der Bearbeitungsreihenfolge anschließende weitere Beschichtungseinrichtung zum Beschichten der Substratplatte (12; 52) mit der weiteren Materiallage (30; 70) hat.

21. Anlage nach einem der Ansprüche 17 bis 20, dadurch **gekennzeichnet,** daß die Beschichtungsanlage die Flachseite (18; 54) der Substratplatte (12; 52) durch Kathodenzerstäubung beschichtet.
